# EUROPÄISCHE PATENTANMELDUNG

(11) **EP 1 271 137 A1**
(43) Veröffentlichungstag der Anmeldung: **02.01.2003**
(21) Anmeldenummer: 01111150.7
(22) Anmeldetag: 10.05.2001
(51) Int. Cl.: G01N 27/49, G01N 27/416

(54) **Elektrochemischer Gassensor**

(71) Anmelder: Envitec-Wismar GmbH, 23966 Wismar (DE)
(72) Erfinder: Fikus, Axel, Dr., 23968 Gägelow (DE); Lindner, Bernd, 23626 Ratekau (DE)
(74) Vertreter: Keller, Günter, Dr.

(57) **Zusammenfassung**

Die Erfindung betrifft einen elektrochemischen Gassensor mit einer als Dünnschichtelektrode ausgebildeten Arbeitselektrode und zumindest einer Gegenelektrode, die über einen Elektrolyten in elektrischem Kontakt stehen. Der elektrochemische Gassensor ist dadurch gekennzeichnet, daß der Elektrolyt alkalisch ist und vorzugsweise eine Lösung eines Salzes einer schwachen Säure umfaßt. Der erfindungsgemäße elektrochemische Gassensor kann bevorzugt zur Bestimmung der Sauerstoffkonzentration in einem Gasgemisch eingesetzt werden.

## Beschreibung

Die Erfindung betrifft einen elektrochemischen Gassensor mit einer als Dünnschichtelektrode ausgebildeten Arbeitselektrode und zumindest einer Gegenelektrode, die über einen Elektrolyten in elektrischem Kontakt stehen. Der Sensor weist eine erhöhte Empfindlichkeit gegenüber herkömmlichen Sensoren auf.

Elektrochemische Gassensoren sind seit langem bekannt. Im Prinzip handelt es sich bei einem elektrochemischen Gassensor um eine einfache Elektrolytzelle, bestehend aus zwei oder mehr Elektroden, die über eine Elektrolyflüssigkeit miteinander elektrisch leitend verbunden sind. Das zu messende Gas wird beispielsweise über eine semi-permeable Membran der Arbeitselektrode zugeführt und geht dort eine elektrochemische Umsetzung ein. Es entsteht ein meßbares elektrisches Signal, das bevorzugt linear mit der Konzentration des speziellen Gases, das die chemische Umsetzung eingeht, verläuft.

Bekannte elektrochemische Gassensoren zur Bestimmung der Sauerstoffkonzentration in einem Gasgemisch enthalten üblicherweise ein Metallgitter als Arbeitselektrode, das mechanisch mit einer gaspermeablen Membran bespannt ist. Ein entsprechender Gassensor wird beispielsweise in dem US-Patent Nr. 5,336,390 beschrieben. Alternativ wird die Arbeitselektrode als Gasdiffusionselektrode ausgestaltet, die aus einer Mischung von Katalysator und organischem Binder besteht, welche unter Druck und erhöhter Temperatur mit einer gaspermeablen Membran versintert sind, wie beispielsweise in der deutschen Offenlegungsschrift DE-A 198 45 318 beschrieben. In einer dritten Ausführungsform kann die Arbeitselektrode durch Abscheiden einer Metallschicht in Dickschichttechnologie auf eine gaspermeable Membran aufgebracht werden.

Diese bekannten Sauerstoffsensoren weisen den Nachteil auf, daß sie einen relativ großen Fertigungsaufwand erfordern, um beispielsweise Abweichungen in den Fertigungstoleranzen möglichst zu verhindern. Darüber hinaus ist die Empfindlichkeit dieser Sensoren für manche Anwendungen unbefriedigend und es wäre wünschenswert, die Ansprechzeiten dieser bekannten Sauerstoffsensoren zu verkürzen.

Neben den vorgenannten bekannten elektrochemischen Gassensoren, deren Arbeitselektrode ein Metallgitter oder eine relativ dicke Metallschicht umfaßt, sind auch elektrochemische Gassensoren mit einer als Dünnschichtelektrode ausgebildeten Arbeitselektrode bekannt. Beispielsweise offenbart die DE-A 197 45 486 eine elektrochemische Meßzelle zum Nachweis von Arsin und Phosphin in der die Arbeitselektrode als Dünnschichtelektrode ausgeführt ist und in der der Elektrolyt aus Schwefelsäure mit einem Elektrolytzusatz aus Silbersulfat besteht. Hierdurch soll die Querempfindlichkeit gegenüber anderen Gasen verbessert werden.

In der DE-A 198 59 198 wird ein elektrochemischer Gassensor zur selektiven Bestimmung der Stickstoffmonoxidkonzentration in einem Gasgemisch beschrieben. Die Arbeitselektrode wird durch Dünnschichtabscheidung von zumindest einem Metall und einem Nichtmetall auf ein Substrat erhalten. Hierdurch soll die Querempfindlichkeit zu anderen Schadgasen, insbesondere zu Kohlenmonoxid, vermindert werden. Als mögliche Elektrolyte werden neben Schwefelsäure und Phosphorsäure auch allgemein alkalische Lösungen genannt, wobei in dem Beispiel jedoch 35%ige Schwefelsäure als Elektrolyt eingesetzt wird.

In Bezug auf alkalische Elektrolyten bestand die weit verbreitete Meinung, daß Dünnschichtelektroden insbesondere mit gesputterten Metallschichten in Lösungen mit hohem pH-Wert aufgrund der Kriechfähigkeit konzentrierter Laugen mechanisch instabil sind und sich deshalb alkalische Lösungen als Elektrolyten für Gassensoren mit derartigen Arbeitselektroden nicht eignen.

Eine Aufgabe der vorliegenden Erfindung besteht somit darin, einen Gassensor zur Verfügung zu stellen, der die Nachteile der im Stand der Technik bekannten Gassensoren nicht aufweist. Insbesondere soll der Gassensor mit einem geringen Fertigungsaufwand herstellbar sein, eine hohe Empfindlichkeit aufweisen und eine möglichst geringe Ansprechzeit realisieren.

Es wurde nun überraschend gefunden, daß entgegen der herrschenden Vorurteile eine als Dünnschichtelektrode ausgeführte Arbeitselektrode in einer stark alkalischen Elektrolytlösung stabil ist, und daß hierdurch ein elektrochemischer Gassensor zur Bestimmung der Sauerstoffkonzentration in einem Gasgemisch zur Verfügung gestellt werden kann, der die vorstehend genannten Nachteile überwindet.

Die vorliegende Erfindung betrifft somit einen elektrochemischen Gassensor mit einer als Dünnschichtelektrode ausgebildeten Arbeitselektrode und zumindest einer Gegenelektrode, die über einen Elektrolyten in elektrischem Kontakt stehen, dadurch gekennzeichnet, daß der Elektrolyt alkalisch ist.

Der Aufbau des elektrochemischen Gassensors kann als Zweielektrodensystem oder als Dreielektrodensystem, wie es z.B. in der US 5,336,390 beschrieben ist, ausgeführt sein. Hierbei umfaßt der erfindungsgemäße Gassensor zusätzlich zu der Arbeitselektrode eine Gegenelektrode (Zweielektrodensystem) oder eine Gegen- und eine Bezugselektrode (Dreielektrodensystem). Auch Mehrelektrodensysteme, wie beispielsweise Vierelektrodensysteme, sind möglich, diesen liegt jedoch gegenüber den Dreielektrodensystemen kein neues technisches Meßkonzept zugrunde.

Als Gegenelektrode bzw. als Gegenelektrode und Bezugselektrode können übliche Elektroden des Standes der Technik verwendet werden, es ist allerdings auch möglich, eine Dünnschichtelektrode als Gegenelektrode oder Bezugselektrode einzusetzen. Vorzugsweise wird ein poröser Bleikörper, wie beispielsweise in dem US 5,336,390 beschrieben, als Gegenelektrode verwendet. Dieser poröse Bleikörper wird bei der Herstellung des Sensors mit Elektrolyt getränkt.

Der pH-Wert des alkalischen Elektrolyten liegt vorzugsweise in einem Bereich von 8-14, besonders bevorzugt von 12-14. Der Fachmann hatte bei einem derartigen, stark alkalischen Elektrolyten mit einer verminderten Stabilität der Dünnschichtelektrode gerechnet. Es wurde nun jedoch überraschend gefunden, daß entsprechende Stabilitätsprobleme trotzt des hohen pH-Werts des Elektrolyten nicht auftreten.

Die Stabilität der Dünnschichtelektrode in dem erfindungsgemäßen Gassensor kann durch die Basenkonzentration in dem Elektrolyten beeinflußt werden. Mit sinkender Basenkonzentration steigt die Stabilität der Dünnschichtelektrode, jedoch sinkt die Leitfähigkeit des Elektrolyten. Wenn gewünscht, kann der Fachmann aus diesen Parametern leicht ein Optimum für Stabilität und Leitfähigkeit ermitteln. Vorzugsweise kann die Konzentration der Base im Bereich von 0,01-0,02 mol/l liegen.

Der Elektrolyt ist vorzugsweise eine wäßrige Lösung.

Darüber hinaus wurde ebenfalls überraschend gefunden, daß die Stabilität der Dünnschichtelektrode durch die Anwesenheit eines Salzes einer schwachen Säure weiter verbessert werden kann.

Als Salz einer schwachen Säure sind im Prinzip alle bekannten Salze schwacher Säuren geeignet, die eine gute Löslichkeit in Wasser aufweisen und die Sensoreigenschaften nicht negativ beeinflussen. Bevorzugt sind, wasserlösliche Phosphate, wasserlösliche Hydrogenphosphate, wasserlösliche Hydrogencarbonate, wasserlösliche Carbonate und wasserlösliche Salze schwacher organischer Säuren, wie beispielsweise wasserlösliche Acetate, wasserlösliche Phthalate, wasserlösliche Oxalate, wasserlösliche Maleate, wasserlösliche Fumarate, wasserlösliche Tartrate, wasserlösliche Citrate und wasserlösliche Succinate. Diese Verbindungen werden vorzugsweise als deren Alkalisalze und besonders bevorzugt als deren Natrium- oder Kaliumsalze eingesetzt. Als besonders vorteilhaft hat sich Kaliumacetat erwiesen. Es können auch Mischungen von zwei oder mehr Salzen schwacher Säuren eingesetzt werden.

Der hohe pH-Wert des Elektrolyten wird vorzugsweise durch eine starke Base eingestellt. Hierfür eignen sich im Prinzip alle starken Basen, die in Wasser gut löslich sind und die die Sensoreigenschaften nicht negativ beeinflussen. Wasserlösliche Hydroxide und insbesondere Alkalihydroxide wie beispielsweise Natriumhydroxid und Kaliumhydroxid, haben sich als besonders geeignet erwiesen.

Die Konzentrationen des Salzes einer schwachen Säure und der starken Base in dem Elektrolyten können vom Fachmann für die gewünschten Eigenschaften des elektrochemischen Gassensors geeignet gewählt werden, sie sollten jedoch so sein, daß der pH-Wert des Elektrolyten vorzugsweise in einem Bereich von 12-14 liegt, da damit eine hohe elektrolytische Leitfähigkeit gewährleistet ist. Die Konzentration des Salzes einer schwachen Säure in dem Elektrolyten kann beispielsweise im Bereich von 10 bis 1000 mg/ml, vorzugsweise von 100 bis 700 mg/ml liegen.

In einer besonders bevorzugten Ausführungsform des erfindungsgemäßen elektrochemischen Gassensors enthält dieser einen Elektrolyten, der eine wäßrige Lösung aus Kaliumacetat und Kaliumhydroxid umfaßt, und die Konzentration von Kaliumacetat und Kaliumhydroxid so gewählt sind, daß der pH-Wert des Elektrolyten im Bereich von 12-14 liegt. Vorzugsweise besteht der Elektrolyt aus einer Lösung von etwa 500 mg/ml Kaliumacetat und etwa 1 mg/ml Kaliumhydroxid in Wasser.

Die Dünnschichtelektrode des erfindungsgemäßen elektrochemischen Gassensors umfaßt vorzugsweise eine aktive Schicht auf einem Substrat, wobei die aktive Schicht durch Dünnschichtabscheidung auf dem Substrat erhältlich ist. Die aktive Schicht der Dünnschichtelektrode kann im Prinzip aus einem beliebigen Edelmetall oder einer Legierung mit einem Edelmetall, wie beispielsweise Gold, Platin, Silber oder Palladium bestehen. Zur Bestimmung der Sauerstoffkonzentration in einem Gasgemisch wird vorzugsweise eine aktive Schicht aus Gold eingesetzt.

Verfahren zur Herstellung von Dünnschichtelektroden sind im Stand der Technik bekannt. Insbesondere sei auf die DE-A 198 59 198 verwiesen, in der die Dünnschichtabscheidung von metallischen Komponenten auf einem Substrat mittels kommerziell erhältlicher Vorrichtungen wie zum Beispiel die Beschichtungsanlage PLS 500 der Firma Balzers mit drei Magnetronsputterquellen und einem Hochfrequenz-Sputterätzer ausführlich beschrieben wird. Der Inhalt dieser Offenlegungsschrift wird durch Bezugnahme in die vorliegende Beschreibung aufgenommen.

Vorzugsweise handelt es sich bei der Dünnschichtelektrode des erfindungsgemäßen elektrochemischen Gassensors um eine Sputterelektrode, wobei die aktive Schicht beispielsweise mittels der Kleinsputteranlage "Sputter Coater S150 B" der Firma Edwards auf ein Substrat aufgesputtert wurde. Hierbei kann beispielsweise eine Laminat-Membran der Firma GORE als Substrat und ein Goldtarget eingesetzt werden. Die Laminat-Membran kann z.B. für etwa 3 Min. beschichtet werden.

Vorzugsweise wird die Beschichtung so durchgeführt, daß die aktive Schicht auf dem Substrat eine geeignete Dicke aufweist. In der Regel wird die Schichtdicke 1 um nicht überschreiten, wobei Schichtdicken von 200-600 nm bevorzugt sind. Die geeignete Schichtdicke kann vom Fachmann leicht für eine bestimmte Anordnung durch einfache Routineversuche bestimmt werden.

Als Substrat für die aktive Elektrode des erfindungsgemäßen elektrochemischen Gassensors können beliebige bekannte Substrate verwendet werden. So ist es möglich, flüssigkeitsdurchlässige Substrate zu verwenden, wie einen porösen Keramikkörper oder ein poröses Glassubstrat. Wird ein solches flüssigkeitsdurchlässiges Substrat verwendet, ist das Substrat elektrolytdurchlässig und dient als Elektrolytreservoir. In dem erfindungsgemäßen Gassensor weist dann die aktive Schicht der Arbeitselektrode nach außen. Zur Begrenzung des Zellenraums wird auf die aktive Schicht eine für Flüssigkeiten undurchlässige Membran aufgebracht.

Alternativ ist es ebenfalls möglich, ein für Flüssigkeiten undurchlässiges Substrat zu verwenden, z.B. eine flüssigkeitsundurchlässige, gaspermeable Membran. Das Substrat dient dann als Träger der aktiven Schicht, als Diffusionsmembran für das Gas und schließt darüber hinaus den Elektrolytraum nach außen hin ab. Bei dieser Ausführungsform des erfindungsgemäßen Gassensors zeigt die aktive Schicht nach innen. Geeignete Membranen wie beispielsweise organische Folien, die als flüssigkeitsundurchlässige, gaspermeable Membranen dienen können, sind in der Technik bekannt.

Erfindungsgemäß bevorzugt umfaßt die Dünnschichtelektrode eine aktive Schicht, die auf einer flüssigkeitsundurchlässigen, gaspermeablen Membran als Substrat aufgebracht ist.

Der erfindungsgemäße elektrochemische Gassensor kann in beliebigen Verfahren und Vorrichtungen des Standes der Technik beispielsweise zur Bestimmung der Sauerstoffkonzentration in einem Gasgemisch eingesetzt werden. Die Konzentration an Sauerstoff, die mit dem erfindungsgemäßen Gassensor bestimmt werden kann, ist nicht besonders eingeschränkt. Ein besonderer Vorteil des erfindungsgemäßen Gassensors besteht jedoch in seiner besonderen Empfindlichkeit, die gegenüber herkömmlich hergestellten Sensoren bis zu 20-fach erhöht ist. Dementsprechend kann der erfindungsgemäße Gassensor auch bevorzugt bei sehr niedrigen Konzentration an Sauerstoff eingesetzt werden, beispielsweise bei Konzentrationen von etwa 100-1000 ppm.

In einer bevorzugten Ausführungsform weist der erfindungsgemäße elektrochemische Gassensor eine geringe Ansprechzeit auf.

Ein weiterer Vorteil des erfindungsgemäßen elektrochemischen Gassensors besteht in dem geringen Fertigungsaufwand gegenüber herkömmlich hergestellten Sauerstoffsensoren, da die wesentlichen Elemente des Sensors (gaspermeable Membran und Arbeitselektrode) in einem Arbeitsschritt miteinander verbunden werden. Die Fertigungszeit wird dadurch verkürzt und Abweichungen in den Fertigungstoleranzen treten aufgrund der vollständigen Automatisierung nicht oder zumindest nur in vermindertem Maße auf. Dadurch kann der erfindungsgemäße Gassensor nicht nur preiswerter hergestellt werden sondern die Meßgenauigkeit wird zusätzlich erhöht.

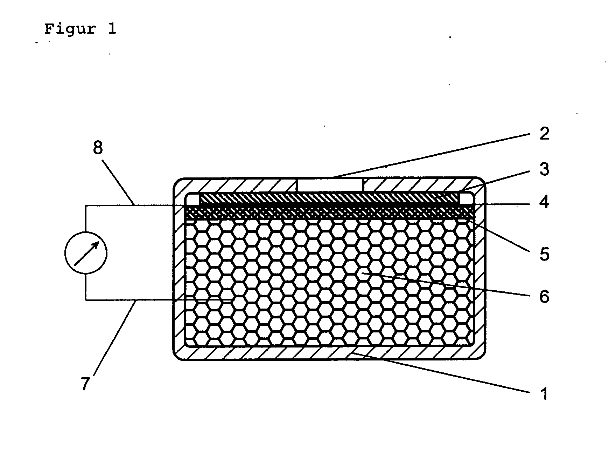

Figur 1 zeigt einen erfindungsgemäßen elektrochemischen Gassensor.

Das folgende Beispiel erläutert die Erfindung, ohne sie darauf einzuschränken.

### BEISPIEL

Zur Herstellung einer Arbeitselektrode wurde eine Kleinsputteranlage "Sputter Coater S150 B" der Firma Edwards mit einem Goldtarget verwendet. Mit dieser Beschichtungsanlage wurde eine Laminat-Membran der Firma GORE als Substrat beschichtet. Die Beschichtungszeit betrug 3 min.

Aus der mit Gold beschichteten Laminat-Membran wurd eine Arbeitselektrode gestanzt und in einen Sauerstoffsensor eingebaut, wie er in Figur 1 dargestellt ist, auf die im folgenden Bezug genommen wird.

In einem Gehäuse 1 sind die Arbeitselektrode, bestehend aus Laminat-Membran 3 und Sputterbeschichtung 4, mit elektrischer Ableitung 8 sowie die Gegenelektrode 6 mit elektrischer Ableitung 7 untergebracht. Über die Diffusionsöffnung 2 gelang das zu analysierende Gas oder Gasgemisch an die Diffusionsmembran 3. In der gezeigten Ausführungsform besteht die Gegenelektrode aus einem porösen Bleikörper, welcher mit dem Elektrolyten getränkt ist (vgl. z.B. US 5,336,390). Der elektrolytische Kontakt zur Arbeitselektrode erfolgt über ein Seperationsvlies 5, welches ebenfalls mit der Elektrolytlösung getränkt ist. Der Elektrolyt besteht aus einer wäßrigen Lösung von 5 molarem Kaliumacetat und 0,0166 molarem Kaliumhydroxid.

## Patentansprüche

1. Elektrochemischer Gassensor mit einer als Dünnschichtelektrode ausgebildeten Arbeitselektrode und zumindest einer Gegenelektrode, die über einen Elektrolyten in elektrischem Kontakt stehen, **dadurch gekennzeichnet, daß** der Elektrolyt alkalisch ist.

2. Elektrochemischer Gassensor nach Anspruch 1, **dadurch gekennzeichnet, daß** der Elektrolyt eine Lösung eines Salzes einer schwachen Säure umfaßt.

3. Elektrochemischer Gassensor nach Anspruch 1 oder 2, **dadurch gekennzeichnet, daß** der Elektrolyt einen pH-Wert im Bereich von 12-14 aufweist.

4. Elektrochemischer Gassensor nach Anspruch 2 oder 3, **dadurch gekennzeichnet, daß** das Salz einer schwachen Säure ausgewählt ist aus der Gruppe bestehend aus wasserlöslichen Salzen schwacher organischer Säuren, wasserlöslichen Phosphaten, wasserlöslichen Hydrogenphosphaten, wasserlöslichen Hydrogencarbonaten und wasserlöslichen Carbonaten.

5. Elektrochemischer Gassensor nach einem der vorhergehenden Ansprüche, **dadurch gekennzeichnet, daß** der Elektrolyt die Lösung einer starken Base, vorzugsweise eines wasserlöslichen Hydroxids umfaßt.

6. Elektrochemischer Gassensor nach Anspruch 5, **dadurch gekennzeichnet, daß** der Elektrolyt eine wäßrige Lösung aus einem Alkaliacetat und einem Alkalihydroxid, vorzugsweise aus Kaliumacetat und Kaliumhydroxid umfaßt.

7. Elektrochemischer Gassensor nach einem der vorhergehenden Ansprüche, **dadurch gekennzeichnet, daß** die Arbeitselektrode eine aktive Schicht auf einem Substrat umfaßt, wobei die aktive Schicht durch Dünnschichtabscheidung auf dem Substrat erhältlich ist.

8. Elektrochemischer Gassensor nach Anspruch 7, **dadurch gekennzeichnet, daß** die Arbeitselektrode als Sputterelektrode ausgebildet ist.

9. Elektrochemischer Gassensor nach Anspruch 7 oder 8, **dadurch gekennzeichnet, daß** die aktive Schicht aus einem Edelmetall oder einer Edelmetallegierung und vorzugsweise aus Gold besteht.

10. Elektrochemischer Gassensor nach einem der Ansprüche 7 bis 9, **dadurch gekennzeichnet, daß** das Substrat eine flüssigkeitsundurchlässige, gaspermeable Membran ist.

11. Verfahren zur Herstellung eines elektrochemischen Gassensors, bei dem eine Arbeitselektrode mittels Dünnschichttechnologie hergestellt wird und die so erhaltene Arbeitselektrode auf an sich bekannte Art und Weise mit zumindest einer Gegenelektrode mit einem Elektrolyten zu dem elektrochemischen Gassensor zusammengefügt wird, **dadurch gekennzeichnet, daß** der Elektrolyt alkalisch ist.

12. Verfahren nach Anspruch 11, **dadurch gekennzeichnet, daß** der Elektrolyt eine Lösung eines Salzes einer schwachen Säure umfaßt.

13. Verwendung eines elektrochemischen Gassensors nach einem der Ansprüche 1-10 zur Bestimmung der Sauerstoffkonzentration in einem Gasgemisch.
